(19) Europäisches Patentamt
European Patent Office
Office européen des brevets

(11) **EP 3 522 138 B1**

(12) **EUROPEAN PATENT SPECIFICATION**

(45) Date of publication and mention
of the grant of the patent:
**21.07.2021 Bulletin 2021/29**

(51) Int Cl.:
**G09F 3/00** (2006.01)  **F16L 11/12** (2006.01)
**G06K 19/077** (2006.01)

(21) Application number: **19155174.6**

(22) Date of filing: **01.02.2019**

(54) **THERMOPLASTIC PIPE SYSTEM**

THERMOPLASTISCHES ROHR SYSTEM

SYSTEME DE TUYAU THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2018 PL 42445418**

(43) Date of publication of application:
**07.08.2019 Bulletin 2019/32**

(73) Proprietor: **Smart Textiles Sp. z o.o**
**02-013 Warszawa (PL)**

(72) Inventors:
• **Futera, Konrad**
**06-400 Ciechanow (PL)**

• **Weinar, Remigiusz**
**05-200 Wolomin (PL)**

(74) Representative: **AOMB Polska Sp. z.o.o.**
**Ul. Emilii Plater 53**
**21st Floor**
**00-113 Warsaw (PL)**

(56) References cited:
**EP-A1- 2 711 169**     **WO-A2-2005/084354**
**DE-A1-102008 036 389**  **GB-A- 2 467 185**
**US-A1- 2005 001 785**   **US-A1- 2009 033 495**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The object of the invention is a thermoplastic pipe system comprising a thermoplastic pipe with a RFID system comprising a RFID label, for the purpose of, e.g., detecting the pipeline in the ground. More specifically, the invention relates to a thermoplastic pipe system comprising a thermoplastic pipe with an RFID system on the outer layer of the pipe, and coated with the same material which the pipe is made of, such that the RFID label is not visible.

In the Prior Art, the pipes with the systems allowing the localisation and identification of pipes similar to the solution that is the object of the present invention are known. Those are the systems using pipe marking by means of RFID (*Radio-Frequency Identification*)labels*,* optical, chemical, acoustic and other sensors, as well as various types of labels, wherein these known solutions differ from the solution of the present invention.

Document WO2014204765A1 (D1) discloses a pipe made of a knitted composite material with a plurality of interlocking loops. The pipe comprises an integral RFID label to identify the fluid, which the pipe is intended to convey, located between the knitted material and the surface of the pipe. The entire set according to D1 differs from the present invention, e.g. in the location of RFID labels and the presence of conductors, as well as in the material which the pipe is made of.

Document CN103791174A (D2) relates to a composite thermoplastic glass-reinforced pipe and a method for producing the pipe consisting of three layers: an inner, middle and outer layer. The inner layer is a circumferentially-wound continuous layer of a guiding tape made of a fiberglass-reinforced thermoplastic material, and the outer layer is a circumferentially-wrapped- continuous layer of a guiding tape made of a fiberglass-reinforced thermoplastic resin. The present invention discloses a pipe of one type of thermoplastic material. Moreover, although D2 discloses the method of winding the guiding tape onto the pipe, in contrast to the present invention, the tape does not contain any identifying elements, such as RFID.

Document CA2305148C (D3) discloses a tubular member with a sensor, placed in one of the layers thereof, selected from a group consisting of acoustic, optical, mechanical, electrical, pressure, temperature and chemical sensors, wherein this sensor is positioned on the guide element along the entire length of the pipe in the longitudinal direction. Document D3 does not disclose any label or RFID system.

Document CN107109909A (D4) relates to a pipe having an RFID label being an integral part of one of the layers of the pipe, wherein this label is placed in a cavity carved in the outer layer of the coating or placed centrally in that layer and the label is invisible from the outside. The RFID label extends tangentially to the surface of the pipe and does not connect to any conductor.

Document WO2010106302A1 (D5) discloses a pipe having at least one identification element placed inside the pipe, wherein the identification element may be located on the surface of the layer in the form of a coating or it may be pressed under the previously cut layer, and, after completing the cut out, form one structure with it and without changing the dimensions of the surface, and may be in the form of a memory element or a bar code.

Document US4416309A (D6) applies to markers placed on the external surface of the pipe, identifying the pipe in such a way that the user can read the parameters from the marking, enabling to identify the end of the pipe by making only one hollow in the ground.

Document WO2005001795A2 (D7) discloses a pipe having metal bands which allow the localisation and identification of the pipe.

Document EP2711169A1 discloses a tube comprising at least one inner tube, at least one information carrier which is arranged on the at least one inner tube and an outer cladding tube surrounding the inner tube. The outer cladding tube is transparent for electromagnetic radiation in the visible wavelength region and has a semi-crystalline polyolefin material. A method for producing a tube is also disclosed, wherein the tube is preferably a plastic pipe, with an information carrier, said method comprising continuously feeding or providing at least one inner tube, continuously applying at least one information carrier and on at least one inner tube, and continuously surrounding the inner tube with a cladding tube.

Document DE102008036389A1 discloses a method involving connecting a portion of the foil piece with the outer wall of the tube, where the foil piece comprises a laser sensitive material and a radio-frequency identification transponder. The foil piece is heated during extrusion of the tube. The foil piece is cooled to connect the portion with the outer wall area. The piece of film itself may consist of a mixture of a polymeric material and the at least one laser-sensitive material. The polymeric material can, for example, be formed of polyolefins, preferably PET, and the laser-sensitive material can be formed from or have laser-sensitive pigments, wherein the laser-sensitive pigments can preferably be embedded in the polymeric material in the form of a polyolefinic matrix. A piece of film is used which has at least one RFID transponder, the RFID transponder preferably being embedded in the piece of film. Alternatively, the RFID transponder can be printed on the film piece as a printed circuit. On the RFID transponder further data e.g. relating to the tube can be stored in a known manner and can be read out by radio from the RFID transponder.

Therefore, it is an object of the present invention to provide a thermoplastic pipe system according to the technical features of claim 1. Accordingly, a pipe 1 made of thermoplastic material can be identified with wireless methods by reading RFID labels with a suitable device (e.g. a smartphone) equipped with a suitable application. Such identification can be done while the pipe 1 is placed in the ground, wall or floor, etc., without necessity of exposing the pipe 1.

Preferably, the pipe is made of at least one polyethylene layer.

Preferably, at least one RFID system is placed on a tape that extends on the outside of the top layer of the pipe spirally or longitudinally with respect to the major axis of the pipe. Preferably, the RFID system is immobilized between the top side of the outer layer of the pipe and the coating made of thermoplastic material.

Preferably, the coating made of thermoplastic material is attached to the top of the outer layer of the pipe by edges, preferably by welding, wherein the connection surface of the connection regions lies outside the RFID labels.

Preferably, the antenna circuit comprises a dipole or coil antenna.

Preferably, the pipe further comprises an electronic system which has a first pair of electrical connectors connected to the antenna circuit and at least one additional pair of electrical connectors connected with a conductive material loop for measuring the potential difference at the ends thereof.

Preferably, the label has at least two periodically arranged RFID systems, including RFID labels and loops of conductive material.

Preferably, the antenna circuit is located inside or outside of the loop of a conductive material.

Preferably, the antenna circuit is separated from or connected to the loop circuit of the conductive material.

Preferably, the loop circuit of the conductive material is part of the RFID label or is a separate electrical element connected to the electronic circuit by means of at least one additional pair of electrical connectors of the electronic circuit.

Preferably, the RFID label is coated on one or both sides with a material preventing the adhesion with a layer of an outer pipe layer or with a coating, e.g. a polypropylene film, PTFE (polytetrafluoroethylene) film, talc, metallic foil.

Preferably, the pipe is placable in the ground, road surface, wall, ceiling or floor of the building.

The damage to the pipe is identified by checking the continuity of the conductive material loop circuit 5. The RFID system 4 activated by the reader measures the resistance of the loop circuit 5 and, in the event of a circuit interruption, sends the relevant information to the reader.

The invention will now be further illustrated in a preferred embodiment with a reference to the accompanying drawings, in which:

Fig. 1    presents a pipe 1 in a longitudinal view with a tape 3;

Fig. 2    presents a pipe 1 in a longitudinal view with a tape 3 extending through the surface of the pipe 1 in the longitudinal direction, and RFID systems 4 marked on the tape 3, arranged periodically on the tape 3 and the coating 2 covering the tape 3 with RFID systems 4;

Fig. 3    presents a pipe 1 in a longitudinal view with a tape 3 wound onto the surface of the pipe 1 and propagating through this surface spirally, and RFID systems 4 marked on the tape 3, arranged periodically on the tape 3 and the coating 2 covering the tape 3 with RFID systems 4;

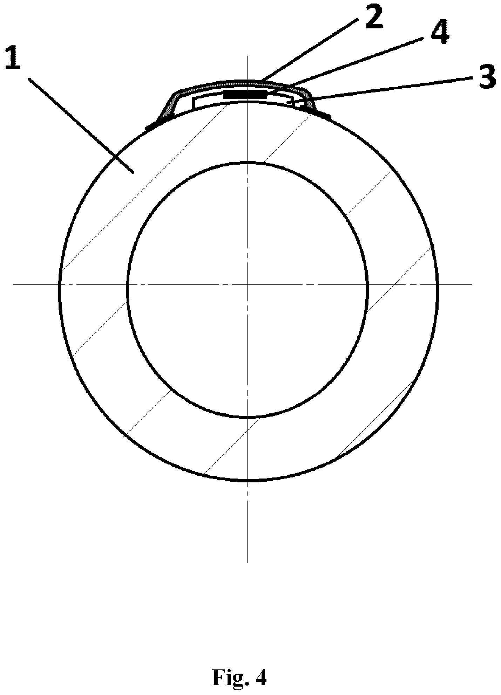

Fig. 4    presents a cross-section of a pipe 1 with marked elements located on the surface of the pipe 1: with the tape 3 with RFID systems 4 protected by a coating 2, edge-mounted to the surface of the pipe 1;

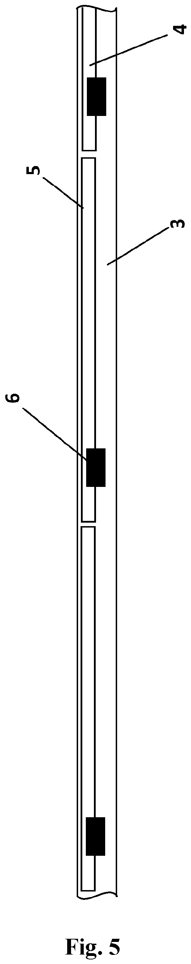

Fig. 5    presents a tape 3 with RFID systems consisting of the conductive material loop 5 and an RFID label 6.

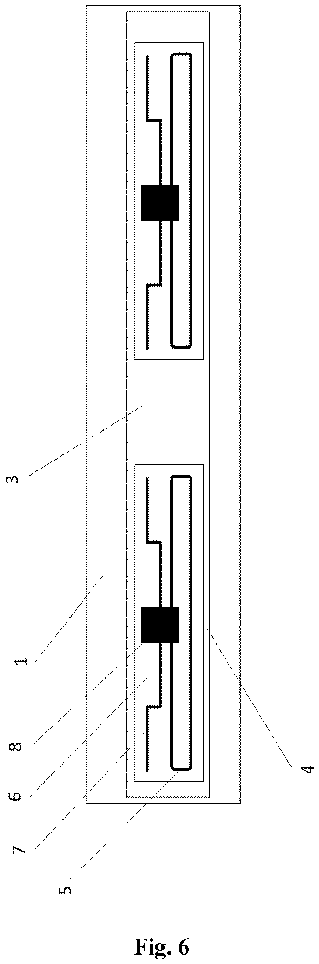

Fig. 6    presents a pipe 1 in a longitudinal view with a tape 3 extending through the surface of the pipe 1 in the longitudinal direction and RFID systems 4 marked on the tape 3, arranged periodically on the tape 3; the RFID systems 4 consist of the conductive material loop 5 and an RFID label 6, which consists of an antenna circuit 7 and an electronic circuit 8 connected electrically to the antenna circuit 7 and to the conductive material loop 5;

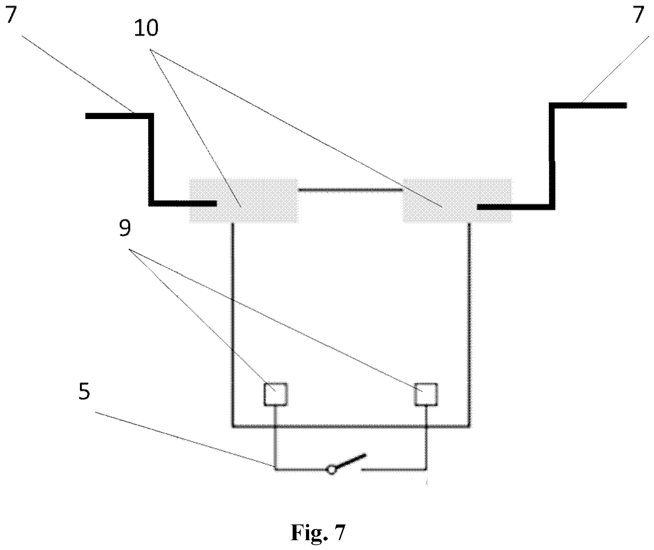

Fig. 7    presents a diagram of the electrical connection of the electronic circuit 8 to the antenna circuit 7 and to the conductive material loop 5; the electronic circuit 8 has a first pair of electrical connectors 10 connected to the antenna circuit 7 and an additional pair of electrical connectors 9 connected to the conductive material loop 5 for measuring the potential difference at its ends; an additional pair of electrical connectors 9 can be dedicated to measure electrical values, e.g. resistance, voltage, capacity and/or a pair of I/O ports;

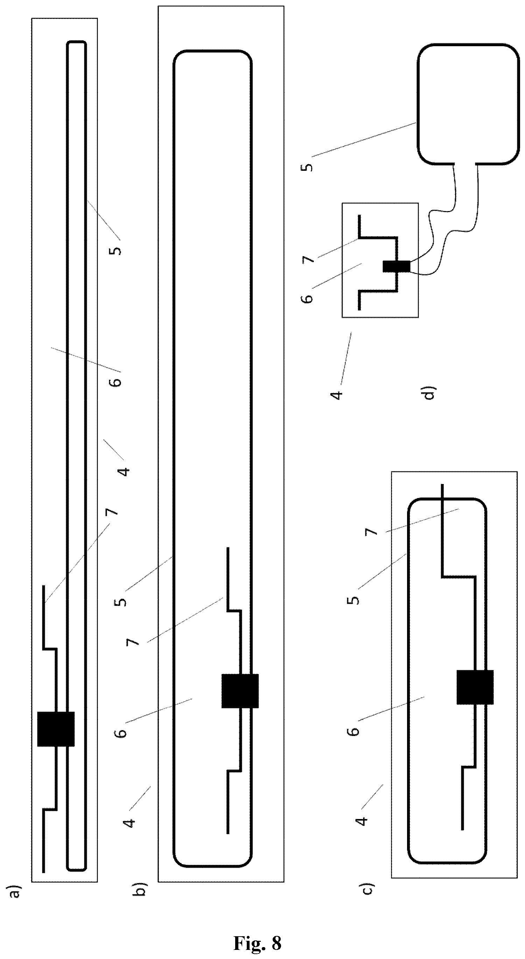

Fig. 8    presents an RFID system 4 having an antenna circuit 7 which is located a) outside of the conductive material loop 5 or b) inside the conductive material loop 5; c) the antenna circuit 7 is connected to the conductive material loop 5; d) the conductive material loop 5 is located outside of the RFID system 4 and can be arranged freely depending on the needs.

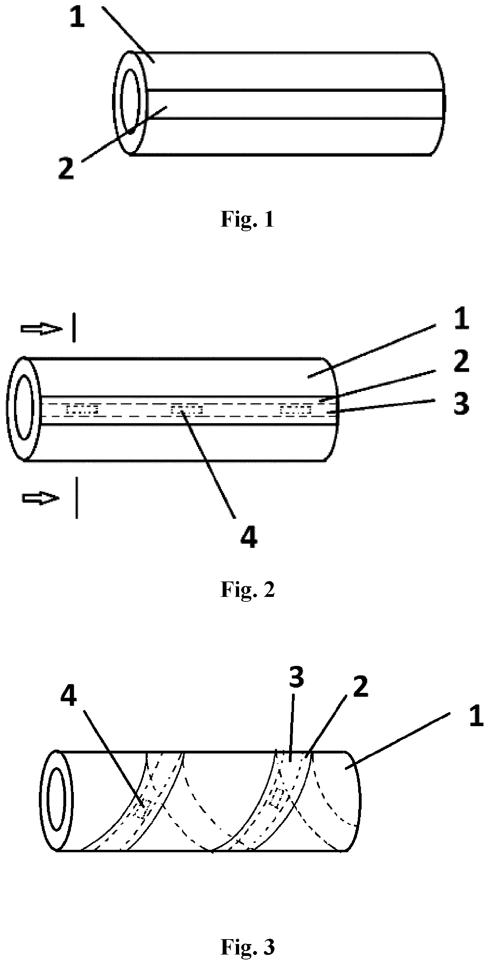

In the first embodiment on Fig. 1, a pipe 1 is made of a thermoplastic material, in particular of polyethylene, and consists of at least one layer of the material, wherein it is not a composite product, i.e. all layers of the pipe 1 are made of the same one type of the material. A tape 3 with RFID systems 4, wound spirally onto the pipe 1, is placed on the top side of the outer layer of the pipe 1. The tape 3 is attached to the pipe 1 in such a way that the spool from which the tape 3 is unwound has a brake that resists unwinding, which causes the tape 3 tension with RFID and its slight extension, by about 0.1-0.5%. The beginning of the tape 3 is glued with an adhesive tape or with a weak glue, e.g. cellulose or other type, which degrades at a temperature of about 80°C during coating of subsequent layers of material in such a way that the tape 3 with RFID can slide inside the tunnel when bending the pipe or during thermal changes in the dimension of the pipe 1 (tape 3 with RFID and pipe 1 have different coefficients of thermal expansion; moreover, the interior of the pipe 1 can transport e.g. hot water, while the pipe can lie in a cold river). RFID systems 4 consisting of conductive material loops 5 and RFID labels 6 are arranged periodically on the tape 3, at intervals of 0.01 m to 5 m, wherein at least two RFID systems 4 per one pipe 1 section, wherein the sections are 0.5 m to 30 m long, sometimes 100 m. The RFID layout is described by the following formula:

$$\text{(the maximum gap between the origin of the RFID systems)} = \text{(the length of the pipe)}/2$$

where:

2 - a number of RFID systems 4, which must be present on the given section of the pipe 1.

It is essential that the RFID label used in the present invention has an electronic circuit (so called chip) 8 whose ports are connected to the control circuit 5 in the form of said loop of conductive material and to the antenna circuit 7. The antenna circuit includes a dipole, a coil or another antenna - depending on and according to the frequencies provided for communication. In particular, in the present invention, for example, the following RFID label model available on the market can be used: UNICODE G2iL+ by NXP.

The tape 3 is trapped on the surface of the pipe 1 so that it is coated with a thermoplastic material, the same one from which the pipe 1 is made, selected from a group of: polyethylene, polypropylene, polycarbonate. The coating 2 is edge-mounted to the surface of the pipe 1 by welding with hot air, creating a tunnel through which the tape 3 with RFID systems 4 propagates.

The second embodiment (Fig. 2) relates to said thermoplastic pipe 1, wherein the tape 3 with RFID systems 4 extends along the surface of the pipe 1 in the longitudinal direction.

The pipe 1 can be manufactured in the following process:

The previously obtained thermoplastic material pipe 1 is matted and then the tape 3 with RFID systems 4 is applied onto the surface in the same manner as described above or tightly wound or glued using a weak adhesive, afterwards the tape 3 is coated on the outside with thermoplastic polyethylene, polypropylene or polycarbonate, forming a coating 2 on the tape 3 and the RFID systems 4 so that the RFID labels 6 are not visible from the outside.

In the second embodiment, not part of the invention, the thermoplastic material pipe 1 previously formed by extruding is squeezed into a pipe of the same material, with a larger diameter, and the tape 3 with the RFID systems 4 is placed in-between.

As mentioned previously, the damage to the pipe is identified by checking the continuity of the conductive material loop circuit 5. The RFID system 4 activated by the reader measures the resistance of the loop circuit 5 and, in the event of a circuit interruption, sends the relevant information to the reader. The identification can be done by wireless reading of RFID labels 6 with a suitable device (e.g. a smartphone) equipped with a suitable application. Such identification can be performed while the pipe 1 is placed in the ground (soil), in the subsoil layers under the roadway (e.g. sand, gravel and bituminous masses in case of expressway), in a wall, ceiling or floor (flooring) of the building, etc., without the need to expose the pipe 1 - and therefore without the need to dig it out of the ground or to destroy the wall.

The third embodiment uses the RFID system 4 in the form of an RFID label 6, equipped with an antenna circuit 7 without the conductive material loop 5 circuit. Such an RFID label (as in the case of previous embodiments) serves to identify the pipe, as well as to locate the position of the pipe in the ground, flooring or wall by measuring the strength of the signal transmitted by the RFID system.

In the fourth embodiment, the RFID system 4 in the form of a RFID label 6 covered from the top with a layer of material that prevents gluing or welding, for example with polypropylene foil, is applied onto the previously obtained thermoplastic material pipe 1. The RFID labels 6 are adhered to the bottom side using the weak adhesive, and the pipe 1 together with the RFID tags 6 is coated on the outside with thermoplastic polyethylene, polypropylene or polycarbonate, forming a coating 2 on the RFID systems 4 so that RFID labels 6 are not visible from the outside. The pipe thus formed has the RFID label 6 immobilized between two layers of thermoplastic material and adhered to only one layer, so that when the pipe is bent, the RFID label does not carry the tension or compressive stresses that the coating 2 undergoes during the bending of the pipe, e.g. when the pipe is rolled into a coil. Thanks to this, the RFID label 6 stays undamaged.

A similar effect will be achieved by attaching the RFID label 6 to the obtained coating 2 (by welding the label and coating materials), where the RFID label 6 is covered on the underside with a layer of material that prevents gluing or welding, for example with a polypropylene film. The pipe thus formed has the RFID label 6 immobilized between two layers of thermoplastic material and adhered only to the coating 2. Therefore, when the pipe is bent, the RFID label does not carry the tension or compressive stresses that the pipe 1 undergoes during bending of the pipe, e.g. when the pipe is rolled into a coil. Thanks to this, the RFID label 6 stays undamaged.

In the fifth embodiment, the RFID label 6 is covered on both sides with a material that prevents welding or permanent adhesion with the material of the pipe 1 and coating 2, e.g. with PTFE foil. The RFID label is coated on the underside with a weak adhesive degrading at a temperature above the processing temperature of the pipe 1 material or coating 2, e.g. with a starch adhesive. The RFID label 6 is adhered to the bottom side using the said adhesive, and the pipe 1 together with RFID labels 6 is coated on the outside with thermoplastic material such as polyethylene, polypropylene or polycarbonate, forming a coating 2 on the RFID systems 4, so that RFID labels 6 are not visible from the outside. During this process, the starch adhesive degrades and loses the properties to keep the label on the material of pipe 1 or coating 2. The pipe thus formed has the RFID label 6 immobilized between two layers of thermoplastic material not adhered to any of them, so that when the pipe is bent, the RFID label does not carry the tension or compressive stresses that the pipe 1 and coating 2 undergo during bending of the pipe, e.g. when the pipe is rolled into a coil. Thanks to this, the RFID label 6 stays undamaged.

In another embodiment, the pipe 1 is manufactured by the injection moulding of the thermoplastic into the injection mould as a finished pipe, a moulding or a part thereof. The RFID label 6 is then affixed to the pipe 1 and placed in a different injection mould in which the coating 2 forms itself, from a thermoplastic material, the same as the material of the pipe 1. The pipe or moulding thus obtained has an RFID label immobilized between the material of the pipe 1 and the coating 2.

**Claims**

1. A thermoplastic pipe system comprising a thermoplastic pipe (1) having at least one layer and at least one RFID system (4), which includes a RFID label (6) that includes an electronic circuit (8) connected to an antenna circuit (7), wherein the at least one RFID system (4) is attached on an outer side of the top layer of the pipe (1) and is coated on the outside with a thermoplastic material selected from the group of polyethylene, polypropylene and polycarbonate, polyvinyl chloride PVC forming a coating (2), such that the RFID label (6) is not visible from the outside, wherein the coating (2) is the same material which the pipe (1) is made of,
   wherein the RFID system (4) is entirely outside the outer outline of the top layer of the pipe (1), and wherein, when the pipe (1) is having more than one layer, all layers of the pipe (1) are made of the same one type of the material.

2. The pipe system according to claim 1, **characterized in that** the pipe (1) is made of at least one polyethylene layer.

3. The pipe system according to claim 1 or 2, **characterized in that,** at least one RFID system (4) is placed on a tape (3) that extends on the outside of the top layer of the pipe (1), spirally or longitudinally with respect to the major axis of the pipe (1).

4. The pipe system according to any one of the preceding claims 1 to 3, **characterized in that** the RFID system (4) is immobilized between the top side of the outer layer of the pipe (1) and the coating (2) made of thermoplastic material.

5. The pipe system according to claim 1 to 4, **characterized in that** the coating (2) made of thermoplastic material is attached to the top of the outer layer of the pipe (1) by edges forming connecting regions, preferably by welding, wherein the connection surface of the connection regions lies outside the RFID labels (6).

6. The pipe system according to any one of the preceding claims 1 to 5, **characterized in that** the antenna circuit (7) comprises a dipole or coil antenna.

7. The pipe system according to any one of the preceding claims 1 to 6, **characterized in that** the electronic circuit (8) has a first pair of electrical connectors (10) connected to the antenna circuit (7) and at least one additional pair of electrical connectors (9) connected with a loop circuit (5) of conductive material for measuring the potential difference at the ends thereof.

8. The pipe system according to claim 3, **characterized in that** the tape (3) has at least two periodically arranged RFID systems (4), including RFID labels (6) and loop circuits (5) of conductive material.

9. The pipe system according to any one of the preceding claims 7 to 8, **characterized in that** the antenna circuit (7) is located inside or outside of the loop circuit (5) of conductive material.

10. The pipe system according to any one of the preceding claims 7 to 9, **characterized in that** the antenna circuit (7) is separated from or connected to the loop circuit (5) of conductive material.

11. The pipe system according to any one of the preceding claims 7 to 9, **characterized in that** the loop circuit (5) of conductive material is a part of the RFID label (6) or is a separate electrical element connected to the electronic circuit (8) by means of at least one additional pair of electrical connectors (9) of the electronic circuit (8).

12. The pipe system according to any one of the preceding claims 1 to 11, **characterized in that** the RFID label (6) is coated on one or both sides with a material preventing the adhesion with a layer of an outer layer of the pipe (1), e.g. a polypropylene film, PTFE (polytetrafluoroethylene) film, talc, metallic foil.

13. The pipe system according to any one of the preceding claims 1 to 12, **characterized in that** the pipe (1) is placable in the ground, road surface, wall, ceiling or floor of the building.

## Patentansprüche

1. Thermoplastisches Rohrsystem, das ein thermoplastisches Rohr (1) mit mindestens einer Schicht und mindestens einem RFID-System (4) umfasst,
das ein RFID-Etikett (6) enthält,
das eine elektronische Schaltung (8) enthält, die mit einer Antennenschaltung (7) verbunden ist, wobei das mindestens eine
RFID-System (4) an einer Außenseite der oberen Schicht des Rohrs (1) angebracht ist und an der Außenseite mit einem thermoplastischen Material beschichtet ist, das aus der Gruppe Polyethylen, Polypropylen und Polycarbonat, Polyvinylchlorid-PVC ausgewählt ist, die eine Beschichtung (2) bilden, so dass das RFID-Etikett (6) von außen nicht sichtbar ist, wobei die Beschichtung (2) das gleiche Material ist, aus dem das Rohr (1) hergestellt ist,
wobei das RFID-System (4) vollständig außerhalb des äußeren Umrisses der obersten Schicht des Rohrs (1) liegt, und wobei, wenn das Rohr (1) mehr als eine Schicht aufweist, alle Schichten des Rohrs (1) aus dem gleichen Materialtyp hergestellt sind.

2. Rohrsystem nach Anspruch 1, **dadurch gekennzeichnet, dass** das Rohr (1) aus mindestens einer Polyethylenschicht hergestellt ist.

3. Rohrsystem nach Anspruch 1 oder 2, **dadurch gekennzeichnet, dass** mindestens ein RFID-System (4) auf einem Band (3) angeordnet ist, das sich auf der Außenseite der oberen Schicht des Rohres (1) spiralförmig oder in Längsrichtung in Bezug auf die Hauptachse des Rohres (1) erstreckt

4. Rohrsystem nach einem der vorhergehenden Ansprüche 1 bis 3, **dadurch gekennzeichnet, dass** das RFID-System (4) zwischen der Oberseite der Außenschicht des Rohres (1) und der Beschichtung (2) aus thermoplastischem Material immobilisiert ist.

5. Rohrsystem nach einem der Ansprüche 1 bis 4, **dadurch gekennzeichnet, dass** die Beschichtung (2) aus thermoplastischem Kunststoff an der Oberseite der Außenschicht des Rohres (1) durch Kanten, die Verbindungsbereiche bilden, vorzugsweise durch Schweißen, befestigt ist, wobei die Verbindungsfläche der Verbindungsbereiche außerhalb der RFID-Etiketten (6) liegt.

6. Rohrsystem nach einem der vorhergehenden Ansprüche 1 bis 5, **dadurch gekennzeichnet, dass** die Antennenschaltung (7) eine Dipol- oder Spulenantenne umfasst.

7. Rohrsystem nach einem der vorhergehenden Ansprüche 1 bis 6, **dadurch gekennzeichnet, dass** die elektronische Schaltung (8) ein erstes Paar elektrischer Anschlüsse (10), die mit der Antennenschaltung (7) verbunden sind, und mindestens ein weiteres Paar elektrischer Anschlüsse (9) aufweist, die mit einer Schleifenschaltung (5) aus leitendem Material zur Messung der Potentialdifferenz an deren Enden verbunden sind.

8. Rohrsystem nach Anspruch 3, **dadurch gekennzeichnet, dass** das Band (3) mindestens zwei periodisch angeordnete RFID-Systeme (4), einschließlich RFID-Etiketten (6) und Schleifenschaltungen (5) aus leitendem Material, aufweist.

9. Rohrsystem nach einem der vorhergehenden Ansprüche 7 bis 8, **dadurch gekennzeichnet, dass** die Antennenschaltung (7) innerhalb oder außerhalb der Schleifenschaltung (5) aus leitendem Material angeordnet ist.

**10.** Rohrsystem nach einem der vorhergehenden Ansprüche 7 bis 9, **dadurch gekennzeichnet, dass** die Antennenschaltung (7) von der Schleifenschaltung (5) aus leitendem Material getrennt oder mit dieser verbunden ist.

**11.** Rohrsystem nach einem der vorhergehenden Ansprüche 7 bis 9, **dadurch gekennzeichnet, dass** die Schleifenschaltung (5) aus leitfähigem Material ein Teil des RFID-Etiketts (6) ist oder ein separates elektrisches Element ist, das mit der elektronischen Schaltung (8) mittels mindestens eines zusätzlichen Paares von elektrischen Anschlüssen (9) der elektronischen Schaltung (8) verbunden ist.

**12.** Rohrsystem nach einem der vorhergehenden Ansprüche 1 bis 11, **dadurch gekennzeichnet, dass** das RFID-Etikett (6) ein- oder beidseitig mit einem Material beschichtet ist, das die Haftung mit einer Schicht einer Außenschicht des Rohres (1) verhindert, z. B. eine Polypropylenfolie, PTFE (Polytetrafluorethylen)-Folie, Talk, Metallfolie.

**13.** Rohrsystem nach einem der vorhergehenden Ansprüche 1 bis 12, **dadurch gekennzeichnet, dass** das Rohr (1) im Boden, der Straßenoberfläche, der Wand, der Decke oder dem Fußboden des Gebäudes verlegbar ist.

## Revendications

**1.** Un système de tuyau thermoplastique comprenant un tuyau thermoplastique (1) ayant au moins une couche et au moins un système RFID (4),
qui comprend une étiquette RFID (6)
qui comprend un circuit électronique (8) connecté à un circuit d'antenne (7), dans lequel l'au moins un système RFID (4) est fixé sur un côté extérieur de la couche supérieure du tuyau (1) et est revêtu à l'extérieur d'un matériau thermoplastique choisi dans le groupe du polyéthylène,
polypropylène et polycarbonate, polychlorure de vinyle PVC formant un revêtement (2), de sorte que l'étiquette RFID (6) ne soit pas visible de l'extérieur, dans lequel le revêtement (2) est le même matériau que celui constituant le tuyau (1),
dans lequel le système RFID (4) est entièrement à l'extérieur du contour extérieur de la couche supérieure du tuyau (1), et dans lequel, lorsque le tuyau (1) a plus d'une couche, toutes les couches du tuyau (1) sont réalisées du même type de matériau.

**2.** Le système de tuyau selon la revendication 1, **caractérisé en ce que** le tuyau (1) est constitué d'au moins une couche de polyéthylène.

**3.** Le système de tuyau selon la revendication 1 ou 2, **caractérisé en ce qu'**au moins un système RFID (4) est placé sur un ruban (3) qui s'étend à l'extérieur de la couche supérieure du tuyau (1), en spirale ou longitudinalement par rapport au grand axe du tuyau (1).

**4.** Le système de tuyau selon l'une quelconque des revendications précédentes 1 à 3, **caractérisé en ce que** le système RFID (4) est immobilisé entre la face supérieure de la couche extérieur du tuyau (1) et le revêtement (2) en matière thermoplastique.

**5.** Le système de tuyau selon les revendications 1 à 4, **caractérisé en ce que** le revêtement (2) en matière thermoplastique est fixé au sommet de la couche extérieur du tuyau (1) par des bords formant des zones de connexion, de préférence par soudage, dans lequel la surface de connexion des régions de connexion se trouve à l'extérieur des étiquettes RFID (6).

**6.** Le système de tuyau selon l'une quelconque des revendications précédentes 1 à 5, **caractérisé en ce que** le circuit d'antenne (7) comprend une antenne dipolaire ou bobine.

**7.** Le système de tuyau selon l'une quelconque des revendications précédentes 1 à 6, **caractérisé en ce que** le circuit électronique (8) comporte une première paire de connecteurs électriques (10) connectés au circuit d'antenne (7) et au moins une paire supplémentaire de connecteurs électriques (9) connectés à un circuit en boucle (5) en matériau conducteur pour mesurer la différence de potentiel à leurs extrémités.

**8.** Le système de tuyau selon la revendication 3, **caractérisé en ce que** le ruban (3) comporte au moins deux systèmes RFID (4) disposés périodiquement, comprenant des étiquettes RFID (6) et des circuits en boucle (5) en matériau conducteur.

9. Le système de tuyau selon l'une quelconque des revendications précédentes 7 à 8, **caractérisé en ce que** le circuit d'antenne (7) est situé à l'intérieur ou à l'extérieur du circuit en boucle (5) en matériau conducteur.

10. Le système de tuyau selon l'une quelconque des revendications précédentes 7 à 9, **caractérisé en ce que** le circuit d'antenne (7) est séparé du ou connecté au circuit en boucle (5) en matériau conducteur.

11. Le système de tuyau selon l'une quelconque des revendications précédentes 7 à 9, **caractérisé en ce que** le circuit en boucle (5) en matériau conducteur fait partie de l'étiquette RFID (6) ou est un élément électrique distinct connecté au circuit électronique (8) au moyen d'au moins une paire supplémentaire de connecteurs électriques (9) du circuit électronique (8).

12. Le système de tuyau selon l'une quelconque des revendications précédentes 1 à 11, **caractérisé en ce que** l'étiquette RFID (6) est revêtue sur un ou les deux côtés d'un matériau empêchant l'adhérence avec une couche d'une couche extérieur du tuyau (1), par ex. un film de polypropylène, un film de PTFE (polytétrafluoroéthylène), du talc, une feuille métallique.

13. Le système de tuyau selon l'une quelconque des revendications précédentes 1 à 12, **caractérisé en ce que** le tuyau (1) peut être placé dans le sol, la surface de la route, le mur, le plafond ou le plancher du bâtiment.

Fig. 1

Fig. 2

Fig. 3

Fig. 4

Fig. 5

**Fig. 6**

**Fig. 7**

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014204765 A1
- CN 103791174 A
- CA 2305148 C
- CN 107109909 A
- WO 2010106302 A1
- US 4416309 A
- WO 2005001795 A2
- EP 2711169 A1
- DE 102008036389 A1